# FASCICULE DE BREVET EUROPEEN

(11) **EP 1 565 807 B1**
(45) Date de publication et mention de la délivrance du brevet: **01.11.2017**
(21) Numéro de dépôt: 03796063.0
(22) Date de dépôt: 27.11.2003
(51) Int. Cl.: G06F 3/033, G02F 1/133, H03K 17/96

(54) **DISPOSITIF D'AFFICHAGE DÉDIÉ À DÉTECTION DE PROXIMITÉ**
ZUGEORDNETE ANZEIGEVORRICHTUNG MIT NÄHERUNGSDETEKTION
DEDICATED PROXIMITY-DETECTION DISPLAY DEVICE

(30) Priorité: 28.11.2002 FR 0215068
(43) Date de publication de la demande: 24.08.2005
(73) Titulaire: THALES, 92400 Courbevoie (FR)
(72) Inventeur: FAGARD, Pierre, THALES Intellectual Property, 94117 ARCUEIL (FR)
(74) Mandataire: Collet, Alain
(86) Numéro de dépôt international: PCT/EP2003/050903
(87) Numéro de publication internationale: WO 2004/049269

(56) Documents cités:
- EP-A- 0 306 403
- EP-A- 0 340 096
- EP-A- 0 345 029
- EP-A- 1 220 140
- FR-A- 2 198 677
- US-A- 4 224 615
- US-A- 4 380 040

## Description

L'invention se rapporte à un dispositif d'affichage dédié comportant des moyens de détection de proximité. On utilise de tels dispositifs notamment pour la réalisation de terminaux de communication du type permettant à un opérateur de transmettre et de recevoir des informations dans le cadre d'un échange convivial avec un processeur. L'invention trouve une application particulière pour les écrans des terminaux interactifs comportant des écrans à cristaux liquides dédiés. On entend par écran dédié un écran comportant au moins un ou plusieurs pictogrammes figés lors de la conception de l'écran, comme par exemple décrit dans les documents EP 0 345 029 A, US 4 224 615 A et FR 2 198 677 A.

De tels écrans comportent deux plaques dont l'une au moins est transparente. Entre ces plaques on dispose des molécules de cristal liquide. Pour exciter les molécules de cristal liquide et modifier la polarité d'un rayon lumineux qui les traverse, l'écran comporte des électrodes transparentes situées sur des faces internes des deux plaques. Dans les écrans dédiés, afin de simplifier le routage de plages de raccordement des électrodes, il est connu de réaliser les électrodes de chaque plaque de manière à ce que l'ensemble des pictogrammes se retrouve de façon identique sur les deux électrodes en regard les uns des autres.

Les écrans dédiés sont habituellement rendus tactiles en disposant sur le dispositif une ou plusieurs couches tactiles transparentes à contact ou à effet capacitif, inductif ou équivalent, comme par exemple décrit dans les documents EP 1 220 140 A et US 4 380 040 A. Le dispositif peut alors servir à délimiter des zones d'appuis de cette couche selon une composition désirée. L'appui sur la couche se fait habituellement par un doigt d'un opérateur. Les inconvénients associés à ces procédés connus sont relatifs au coût du composant sensible ajouté sur l'écran et au fait que les informations visuelles fournies par le dispositif sont inévitablement altérées par les couches tactiles rapportées.

Il est par ailleurs connu du document FR 2 630 851 A de réaliser un afficheur à surface tactile incorporée dans lequel on utilise une des électrodes appelées contre-électrode en tant qu'élément sensible, cette contre-électrode pouvant être fractionnée en une pluralité de zones constituant chacune une contre-électrode.

L'application du principe connu à des afficheurs dédiés présente un certain nombre d'inconvénients en ce qu'il ne permet pas d'adapter simplement la taille des contre-électrodes aux différentes formes et nombre de pictogrammes dédiés associés à une zone tactile. C'est ainsi que le routage des plages d'alimentations de chaque contre-électrode tactile peut être rendu très délicat du fait des nombreuses plages d'alimentation desdits pictogrammes associés et en regard de cette même contre-électrode sensible.

D'autre part, dans un afficheur dédié, il n'est pas possible d'ignorer l'influence de la surface individuelle de chaque pictogramme vis-à-vis de la contre-électrode sensible puisque le concepteur du pictogramme a toute liberté pour le faire aussi petit ou aussi grand qu'il le souhaite pour son application.

Ainsi dans l'art connu cela conduirait à définir une contre-électrode inadaptée au besoin de détection par effet capacitif du fait de sa trop petite taille et/ou par des images parasites qui risqueraient d'être engendrées par les plages de raccordement.

L'invention vise à pallier ces problèmes en proposant un écran dédié tactile sans couche tactile rapportée.

A cet effet l'invention a pour objet un dispositif d'affichage, la surface du dispositif étant rendue tactile, le dispositif comportant une première partie dédiée comprenant deux plaques isolantes, une couche de matériau présentant des propriétés électro-optique aptes à rendre visible tout ou partie de sa surface sous l'effet d'un signal de commande électrique, la couche étant disposée entre les deux plaques, au moins une première électrode ayant la forme d'un pictogramme, la première électrode étant disposée sur une face d'une des plaques isolantes, une seconde électrode disposée sur une face de l'autre plaque isolante en regard d'au moins une première électrode,
caractérisé en ce que la seconde électrode est utilisée comme élément sensible de la surface tactile du dispositif par effet capacitif obtenu en posant un doigt d'un utilisateur sur le dispositif en regard de la seconde électrode, la capacité étant crée entre le doigt et la seconde électrode, en ce que la surface de la seconde électrode est au moins 9 mm²,
et en ce que la surface de la seconde électrode est supérieure ou égale à la surface ou à la somme des surfaces de la ou des premières électrodes en regard.

Les dispositifs d'affichage dédiés sont réalisés à l'aide d'écrans à cristaux liquides statiques ou faiblement multiplexés. Ils permettent d'afficher des pictogrammes prédéterminés lors de la conception du dispositif. Dans le cas d'afficheurs statiques ou faiblement multiplexés il est connu de relier ensemble par groupes les contre-électrodes, directement sur la plaque les supportant, afin de simplifier le routage et le nombre de sorties. Il est évident que cette disposition ne permet pas de réaliser un afficheur tactile dans lequel on souhaite pouvoir accéder à chaque contre-électrode sensible. Ainsi, selon l'invention, il est prévu de pouvoir accéder individuellement à chaque sous-ensemble de contre-électrode sensible.

L'invention sera mieux comprise et d'autres avantages apparaîtront à la lecture de la description détaillée d'un mode de réalisation donnée à titre d'exemple, description illustrée par le dessin joint dans lequel :
- la figure 1 représente en coupe un dispositif d'affichage dédié ;
- les figures 2a et 2b représentent un exemple de réalisation d'électrodes d'un dispositif d'affichage conforme à l'invention.

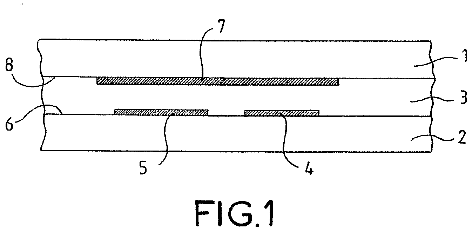

Le dispositif d'affichage représenté sur la figure 1 comporte deux plaques isolantes 1 et 2 disposées l'une au-dessus de l'autre. Au moins l'une des deux plaques 1 ou 2 est transparente. Le dispositif comporte également une couche 3 réalisée dans un matériau présentant des propriétés électro-optiques aptes à transmettre ou non un rayonnement lumineux sous l'effet d'une excitation électrique. Ce matériau comporte par exemple du cristal liquide. La couche 3 est disposée entre les deux plaques 1 et 2. Le dispositif comporte deux premières électrodes 4 et 5 ayant par exemple la forme d'un pictogramme et étant disposée sur une face 6 de la plaque 2. Le dispositif comporte en outre une seconde électrode 7 disposée sur une face 8 de l'autre plaque isolante 1. La seconde électrode 7 est également appelée contre électrode. La seconde électrode 7 est disposée en regard des deux premières électrodes 4 et 5 de telle sorte qu'un signal de commande appliqué entre l'une des premières électrodes et la seconde électrode 7 modifie l'état du cristal liquide entre les électrodes.

Sur la figure 1 seules trois électrodes 4, 5 et 7 ont été représentées à titre d'exemple. Il est bien entendu que l'invention peut être mise en oeuvre quel que soit le nombre d'électrodes.

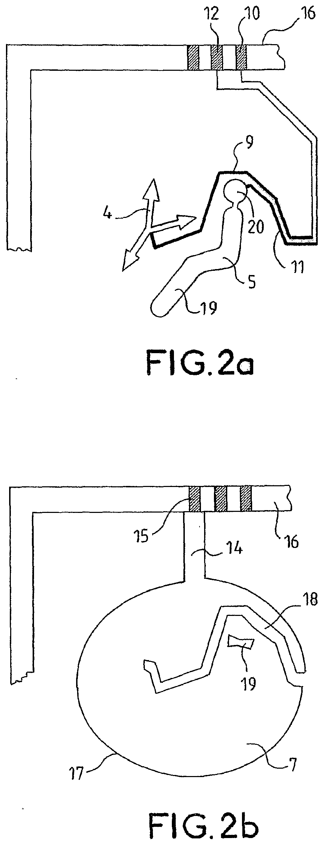

La figure 2a représente un exemple de pictogramme réalisé à l'aide des électrodes 4 et 5. Le pictogramme de l'électrode 4 représente trois flèches concourantes et le pictogramme de l'électrode 5 représente une silhouette humaine assise. Ces deux pictogrammes peuvent représenter par exemple l'état de la ventilation dans un véhicule automobile. L'électrode 4 est reliée électriquement par une plage 9 à un plot de connexion 10. Il en est de même pour l'électrode 5 qui est reliée par une plage 11 à un plot de connexion 12. Les plots 10 et 12 permettent d'appliquer aux électrodes 4 et 5 le signal de commande du dispositif. Les plots 10 et 12 sont situés sur un bord 16 du dispositif.

Les électrodes sont généralement réalisées par gravure. Pour réaliser de façon simple un dispositif d'affichage sans surface tactile, le masque de gravure de la contre électrode est réalisé à partir d'une image miroir du masque de gravure des premières électrodes 4 et 5 sur lequel on raccorde les images miroirs des premières électrodes 4 et 5 par des plages de faible largeur. Cette façon de réaliser la contre électrode est inadaptée à la réalisation d'un dispositif d'affichage dont la surface est rendue tactile selon l'invention.

La figure 2b représente l'électrode 7 et sa plage de raccordement électrique 14. La plage 14 permet d'alimenter l'électrode 7 par un plot 15 situé sur le bord 16 du dispositif. Dans l'exemple de réalisation représenté, un contour 17 extérieur de l'électrode 7 est sensiblement ovale. Lorsque l'électrode 7 est placée en regard des électrodes 4 et 5, ces dernières sont situées à l'intérieur du contour 17. Autrement dit, l'électrode 7 recouvre complètement les électrodes 4 et 5. Ainsi la surface de l'électrode 7 est supérieure ou égale à la somme des surfaces des électrodes 4 et 5. Pour assurer un fonctionnement correct de la détection de proximité par effet capacitif, l'électrode 7 doit avoir une surface d'au moins 9 mm². L'effet capacitif est obtenu en posant un doigt d'un utilisateur sur le dispositif en regard de l'électrode 7. Une capacité est alors créée entre l'électrode 7 et le doigt. En injectant un signal électrique haute fréquence, par exemple 2MHz, sur l'électrode 7, on peut détecter la présence du doigt en analysant un éventuel affaiblissement du signal haute fréquence dû à l'existence de la capacité créée entre le doigt et l'électrode 7. Des essais ont montré que si la surface de l'électrode 7 est inférieure à 9 mm², l'affaiblissement du signal haute fréquence est si faible qu'il est pratiquement impossible à détecter.

Par ailleurs, il est important de garantir que la surface de l'électrode 7 est influencée par le doigt d'un opérateur sans nécessiter de sa part un effort de positionnement précis en regard d'une zone tactile. A cet effet, le motif de la seconde électrode 7 recouvre sensiblement un cercle d'au moins 9 mm de diamètre. En réalisant la contre électrode 7 avec un motif différent de ceux utilisés pour les premières électrodes 4 et 5 cela permet au concepteur du dispositif de réaliser n'importe quelle forme de pictogramme formant le motif des premières électrodes 4 et 5 sans se soucier d'une quelconque surface minimale pour assurer la détection de proximité d'un doigt de l'opérateur. A titre d'exemple on peut associer un pictogramme filiforme à une contre électrode dont le contour est sensiblement convexe. L'affichage est donné par la forme du pictogramme et la détection de proximité est rendue possible par la forme sensiblement convexe de la contre électrode.

Avantageusement, l'électrode 7 est détourée en regard des plages 9 et 10. Plus précisément, la modification d'état du cristal liquide est obtenue en appliquant un signal de commande basse fréquence, par exemple à 100 Hz, entre d'une part l'électrode 7 et d'autre part au moins une des électrodes 4 ou 5. Les plages 9 et 11 sont en partie en regard de l'électrode 7 ou plus précisément à l'intérieur du contour 17 de l'électrode 7. Si l'électrode 7 occupe entièrement la surface située à l'intérieur du contour 17, les parties des plages 9 et 11 en regard de l'électrode 7 sont alors visibles en même temps que les pictogrammes formés par les électrodes 4 et 5. Pour pallier ce défaut et ne laisser apparaître que les pictogrammes, l'électrode 7 est détournée en regard des plages. Un détourage 18 est bien visible sur la figure 2b. Les deux figures 2a et 2b sont représentées à la même échelle et en les superposant, le détourage 18 recouvre la partie des plages 9 et 11 située à l'intérieur du contour 17. Cette superposition préfigure de la disposition des électrodes 4, 5 et 7 dans le dispositif. Sur la figure 2b, on distingue également un autre détourage 19 réalisé dans l'électrode 7, permettant, une fois les électrodes 4, 5 et 7 superposées de séparer visuellement le corps 19 de la tête 20 dans la représentation de la silhouette humaine réalisée à l'aide de l'électrode 5.

Avantageusement, le dispositif comporte plusieurs contre-électrodes (7). Pour assurer la détection de présence d'un élément conducteur à proximité de chaque contre-électrode 7, chacune est alimentée séparément. Plus précisément, chacune possède sa propre plage 14 aboutissant chacune à un plot 15 distinct.

Avantageusement, le dispositif comporte deux parties. Une première partie est dédiée comme décrit plus haut et une seconde partie est non dédiée. Cette seconde partie est avantageusement arrangée sous forme d'une matrice à adressage par lignes et par colonnes. Cet arrangement en deux parties est décrit dans le brevet européen EP 0 306 403.

## Revendications

1. Dispositif d'affichage, la surface du dispositif étant rendue tactile, le dispositif comportant une première partie dédiée comprenant deux plaques isolantes (1, 2), une couche (3) de matériau présentant des propriétés électro-optique aptes à rendre visible tout ou partie de sa surface sous l'effet d'un signal de commande électrique, la couche (3) étant disposée entre les deux plaques (1, 2), au moins une première électrode (4, 5) ayant la forme d'un pictogramme, la première électrode (4, 5) étant disposée sur une face (6) d'une (2) des plaques isolantes, une seconde électrode (7) disposée sur une face (8) de l'autre (1) plaque isolante en regard d'au moins une première électrode (4, 5),
**caractérisé en ce que** la seconde électrode (7) est utilisée comme élément sensible de la surface tactile du dispositif par effet capacitif obtenu en posant un doigt d'un utilisateur sur le dispositif en regard de la seconde électrode (7), la capacité étant crée entre le doigt et la seconde électrode (7), **en ce que** la surface de la seconde électrode (7) est au moins 9 mm²,
et **en ce que** la surface de la seconde électrode (7) est supérieure ou égale à la surface ou à la somme des surfaces de la ou des premières électrodes (4, 5) en regard.

2. Dispositif selon la revendication 1, **caractérisé en ce que** la première électrode (4, 5) est alimentée électriquement par une plage (9, 11) **en ce que** la seconde électrode (7) est détourée en regard de la plage (9, 11).

3. Dispositif selon l'une des revendications précédentes, **caractérisé en ce qu'**il comporte plusieurs secondes électrodes (7), et **en ce que** chaque seconde électrode (7) est alimentée séparément.

4. Dispositif selon l'une des revendications précédentes, **caractérisé en ce que** le motif de la seconde électrode (7) recouvre sensiblement un cercle d'au moins 9 mm de diamètre.

5. Dispositif selon l'une des revendications précédentes, **caractérisé en ce qu'**il comporte une seconde partie non dédiée.

6. Dispositif selon la revendication 5 **caractérisé en ce que** la seconde partie non dédiée est arrangée sous forme d'une matrice à adressage par lignes et par colonnes.

## Patentansprüche

1. Anzeigevorrichtung, wobei die Oberfläche der Vorrichtung berührungsempfndlich gestaltet ist, die Vorrichtung umfassend einen ersten dedizierten Teil umfassend zwei Isolierplatten (1, 2), eine Schicht (3) aus einem Material, das elektrooptische Eigenschaften aufweist, die in der Lage sind, ihre gesamte oder teilweise Oberfläche unter der Wirkung eines elektrischen Steuersignals sichtbar zu machen, wobei die Schicht (3) zwischen den zwei Platten (1, 2) angeordnet ist, mindestens eine erste Elektrode (4, 5), die die Form eines Piktogramms hat, wobei die erste Elektrode (4, 5) auf einer Seite (6) einer (2) der Isolierplatten angeordnet ist, eine zweite Elektrode (7), die auf einer Seite (8) der anderen (1) Isolierplatte gegenüber der mindestens ersten Elektrode (4, 5) angeordnet ist,
**dadurch gekennzeichnet, dass** die zweite Elektrode (7) als sensitives Element der berührungsempfindlichen Oberfläche der Vorrichtung durch kapazitive Wirkung verwendet wird, die erlangt wird, indem ein Finger eines Benutzers auf die Vorrichtung gegenüber der zweiten Elektrode (7) aufgelegt wird, wobei die Kapazität zwischen dem Finger und der zweiten Elektrode (7) geschaffen wird, dass die Oberfläche der zweiten Elektrode (7) mindestens 9 mm² ist,
und dass die Oberfläche der zweiten Elektrode (7) größer als oder gleich wie die Oberfläche oder die Summe von Oberflächen der ersten Elektrode(n) (4, 5) gegenüber ist.

2. Vorrichtung nach Anspruch 1, **dadurch gekennzeichnet, dass** die erste Elektrode (4, 5) elektrisch durch einen Bereich (9, 11) versorgt wird, in dem die zweite Elektrode (7) gegenüber dem Bereich (9, 11) profiliert ist.

3. Vorrichtung nach einem der vorherigen Ansprüche, **dadurch gekennzeichnet, dass** sie mehrere zweite Elektroden (7) umfasst, und dass jede zweite Elektrode (7) separat versorgt wird.

4. Vorrichtung nach einem der vorherigen Ansprüche, **dadurch gekennzeichnet, dass** das Muster der zweiten Elektrode (7) im Wesentlichen einen Kreis mit einem Durchmesser von mindestens 9 mm abdeckt.

5. Vorrichtung nach einem der vorherigen Ansprüche, **dadurch gekennzeichnet, dass** sie einen zweiten nicht dezidierten Teil umfasst.

6. Vorrichtung nach Anspruch 5 **dadurch gekennzeichnet, dass** der zweite nicht dedizierte Teil in Form einer Matrix mit Adressierung nach Reihen und Spalten angeordnet ist.

## Claims

1. A display device, the surface of the device being rendered touch-sensitive, the device comprising a first dedicated part comprising two insulating plates (1, 2), a layer (3) of material exhibiting electro-optical properties suitable for rendering all or part of its surface visible under the effect of an electrical control signal, the layer (3) being disposed between the two plates (1, 2), at least one first electrode (4, 5) having the shape of a pictogram, the first electrode (4, 5) being disposed on a face (6) of one (2) of the insulating plates, a second electrode (7) disposed on a face (8) of the other (1) insulating plate opposite at least one first electrode (4, 5),
**characterised in that** the second electrode (7) is used as responsive element of the touch-sensitive surface of the device by capacitive effect obtained by placing a finger of a user on the device opposite the second electrode (7), the capacity being created between the finger and the second electrode (7), **in that** the surface area of the second electrode (7) is at least 9 mm²,
and **in that** the surface area of the second electrode (7) is greater than or equal to the surface area or the sum of the surface areas of the first electrode or electrodes (4, 5) opposite.

2. The device as claimed in claim 1, **characterised in that** the first electrode (4, 5) is fed electrically by a pad (9, 11) and **in that** the second electrode (7) is profiled opposite the pad (9, 11).

3. The device as claimed in one of the preceding claims, **characterised in that** it comprises several second electrodes (7), and **in that** each second electrode (7) is fed separately.

4. The device as claimed in one of the preceding claims, **characterised in that** the pattern of the second electrode (7) covers substantially a circle of at least 9 mm in diameter.

5. The device as claimed in one of the preceding claims, **characterised in that** it comprises a second non-dedicated part.

6. The device as claimed in claim 5, **characterised in that** the second non-dedicated part is arranged in the form of a matrix with row-wise and column-wise addressing.
